# EUROPEAN PATENT SPECIFICATION

(11) **EP 4 212 715 B1**
(45) Date of publication and mention of the grant of the patent: **20.08.2025**
(21) Application number: 23151494.4
(22) Date of filing: 13.01.2023
(51) Int. Cl.: F02M 35/10, F02C 7/04, F02C 9/00, F02D 9/02, F02D 9/10, F02M 69/04, F02C 7/232, F02M 57/00

(54) **ENGINE, AN AIRCRAFT, AND A THROTTLE THEREOF**
MOTOR, FLUGZEUG UND DROSSEL DAFÜR
MOTEUR, AÉRONEF ET SON PAPILLON

(30) Priority: 14.01.2022 CN 202220093775 U
(43) Date of publication of application: 19.07.2023
(73) Proprietor: Shanghai Autoflight Co., Ltd., Jinshan District Shanghai 201500 (CN)
(72) Inventor: TIAN, Yu, Shanghai, 201500 (CN)
(74) Representative: MERH-IP Matias Erny Reichl Hoffmann Patentanwälte PartG mbB

(56) References cited:
- EP-A1- 2 169 211
- EP-A2- 2 048 351
- CN-A- 108 150 297
- CN-U- 208 310 906
- US-A1- 2005 205 067
- US-A1- 2006 037 591
- US-A1- 2012 240 898
- US-A1- 2019 345 883

## Description

### FIELD OF THE INVENTION

The invention relates to the technical field of aircraft, in particular to an engine, an aircraft and a throttle thereof.

### BACKGROUND OF THE INVENTION

US 2019/ 345 883 A1 relates to a throttle body, which shall be used as a replacement for a carburetor, and which is adapted to function with electronic fuel injection. US 2006/ 037 591 A1 relates to a system and a method for introducing auxiliary oxygen into a combustion engine. EP 2 048 351 A2 relates to an engine unit, which includes a four-cylinder V-type engine and a throttle body assembly, which has two front and two rear throttle bodies, comprising a throttle valve each. US 2005/ 205 067 A1 relates to a fuel supply system. EP 2 169 211 A1 relates to a throttle body having fuel injection valves, wherein an intake passage is formed to have a transverse cross-section in the form of an oblong circle having a long diameter extending in a direction in which paired branched paths, which are formed in downstream portions of an intake port, are arranged, and a short diameter extending orthogonal to the long diameter, and wherein paired fuel injection valves are attached to a sidewall, extending along the long diameter to be allowed to inject fuel toward the paired branched paths, respectively. CN 208 310 906 U relates to a throttle valve of an aircraft, of which the service life shall be extended. Existing two-cylinder two-stroke piston type aeroengine usually designs a fuel injector to supply fuel, but in this case, once the fuel injector is blocked and causes insufficient fuel supply or cannot supply fuel at all, it will immediately cause the engine to stop running. In this case, there is no redundant design for important components. If the engine fails during flight, there is no emergency response plan, which is very dangerous.

### SUMMARY OF THE INVENTION

The purpose of the invention is to provide an engine, an aircraft and a throttle thereof. The throttle of the invention can improve engine reliability.

For this purpose, the first aspect of the invention provides a throttle, which comprises: a throttle body, the throttle body is be provided with a cavity and comprises an inlet port and an outlet port both of which are connected to the cavity. There is a plurality of fuel injectors, each of which is arranged on the throttle body and sprays fuel into the cavity of the throttle body. There is an air filter arranged on the throttle body and is connected to the inlet port. There is an air door rotatably disposed in the cavity to open or block the inlet port and the outlet port. There is an air door driving part connected to the air door to control the rotation of the air door. A cross section of the cavity is circular.

The second aspect of the invention provides an engine, which can include the above-described throttle.

The third aspect of the invention provides an aircraft, which can include the above-described engine.

Moreover, each fuel injector is arranged on the side wall of the throttle body between the air door and the outlet port and can be connected to the cavity.

Moreover, the fuel injection port of each fuel injector can be arranged obliquely toward the outlet port.

Moreover, the air door driving part can be a steering gear, and the output shaft of the steering gear can be coaxially connected to the air door rotation shaft of the air door.

Moreover, the throttle can further comprise a position sensor, and the position sensor can be connected to the air door and can be used to detect the opening angle of the air door.

Moreover, the throttle can further comprise a pressure sensor. The pressure sensor can be connected to the throttle body and can be used to detect the intake air pressure.

According to the invention, each of the fuel injectors is provided with a quick-connection part, and the quick-connection part is connected to the fuel delivery pipe.

Compared with the prior art, one contemplated implementation mode of the invention with double fuel injectors ensures that the one fuel injector can work when the other fuel injector is blocked or fails, thereby improving the reliability of the engine.

### BRIEF DESCRIPTION OF DRAWINGS

It should be noted that the drawing figures may be in simplified form and might not be to precise scale. In reference to the disclosure herein, for purposes of convenience and clarity only, directional terms such as top, bottom, left, right, up, down, over, above, below, beneath, rear, front, distal, and proximal are used with respect to the accompanying drawings.
Figure 1 shows the structure diagram of the throttle provided by an embodiment of the present invention.
Figure 2 shows a cross-sectional view of the throttle in Figure 1.

The following call-out list of elements in the drawing can be a useful guide when referencing the elements of the drawing figures:
1 throttle body; 10 cavity; 11 inlet port; 12 outlet port;
2 fuel injector; 2a fuel injector A; 2b fuel injector B; 21 quick-connection part;
3 air filter;
4 air door; 41 air door rotation shaft;
5 air door rotating assembly; 51 rotating part; 52 spring; 53 fixed bracket;
6 pressure sensor;
7 position sensor;
8 limiting part.

### DETAILED DESCRIPTION

The following describes the various possible implementation modes of the disclosed subject matter through specific embodiments, and those skilled in the art can easily understand the advantages and effects of the embodiments from the contents disclosed in the description.

When a device is described to be "above" another part, it can be directly on the other part, but it can also be accompanied by other parts in between. In contrast, when a part is described as being "directly" on another part, it is not accompanied by other devices in between.

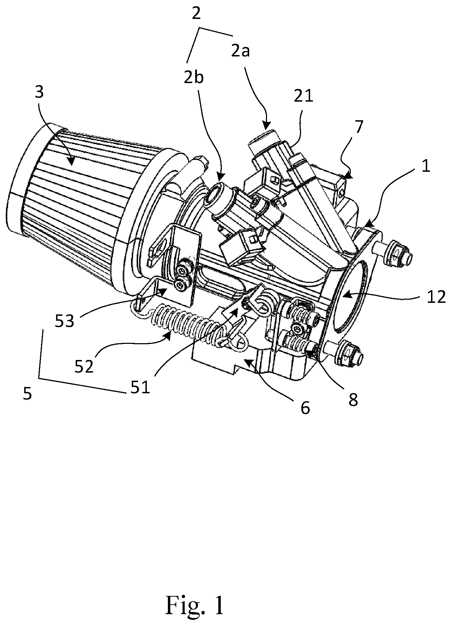

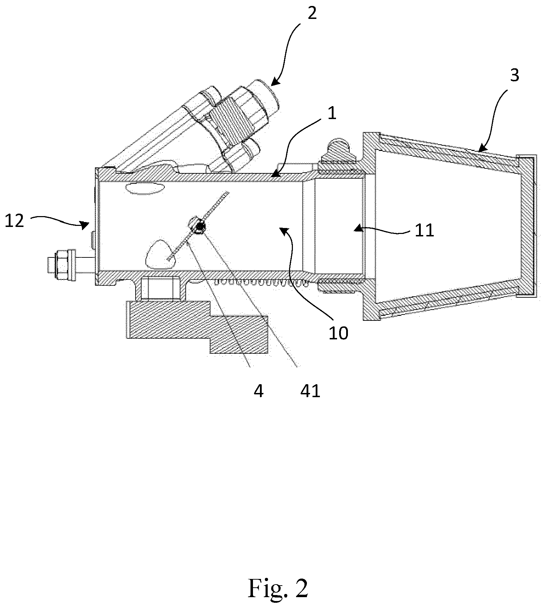

The first embodiment of the invention is described below with reference to the drawings. As shown in Figures 1 and 2, the throttle of the invention comprises a throttle body 1, a fuel injector 2, an air filter 3, an air door 4 and an air door driving part (not shown in the figure), the throttle body 1 is provided with a cavity 10, and the cavity 10 has an inlet port 11 and an outlet port 12. The fuel injectors 2 is arranged on the throttle body 1 and connected to the cavity 10, and it can spray fuel into the cavity 10. The cross section of the cavity 10 is circular, but it can also be other shapes, it is not limited here. The fuel injector 2 is preferably arranged on the side wall of the throttle body 1 between the air door 4 and the outlet port 12 and connected to the cavity 10, and the fuel injection port of the fuel injector 2 which connected to the cavity 10 is arranged preferably obliquely toward the outlet port 12. The fuel injector 2 comprises a fuel injector A 2a and a fuel injector B 2b. Through the implementation of double fuel injectors, one fuel injector can work when the other fuel injector is blocked or fails. However, it is understandable that it can also be provided with more than two fuel injectors. The fuel injector is provided with a quick-connection part 21, which is used to connect to the fuel delivery pipe, making such connection convenient and quick.

The air filter 3 is arranged on the throttle body 1 and is connected to the inlet port 11. The outside air is filtered through the air filter 3 to prevent impurities from entering the engine and damaging the engine. The air door 4 is arranged in the cavity 10, which can rotate in the cavity 10 to connect or block the inlet port 11 and the outlet port 12, thereby controlling the volume of air intake. The fuel sprayed out by the fuel injector 2 is mixed with the air passing through the air door 4 and then enters the engine. The amount of fuel and air can be controlled through the fuel injector 2 and the air door 4 respectively, so as to obtain the corresponding mixing ratio to supply the engine to work. The rotation of the air door 4 can be realized by the air door driving part. The air door driving part can be a steering gear. The output shaft of the steering gear can be coaxially connected to the rotation shaft of the air door 4, and the rotation of the air door is controlled by the steering gear.

In some embodiments, the air door driving part is connected to the air door 4 through a pull wire (not shown in the figure) to control the rotation of the air door 4. The air door driving part can be installed separately from the engine through the pull wire, so as to avoid the influence of engine vibration, thereby greatly reducing the probability of failure and increasing the working life. The air door driving part can be a steering gear. The steering gear is installed separately from the throttle, and the volume of air intake is controlled by pulling the air door with the pull wire, which avoids the engine vibration being too strong to damage the steering gear, causing the engine to run out of control, and improves the reliability of the engine.

In some embodiments, as shown in FIG. 1, the throttle further comprises an air door rotating assembly 5, the air door rotating assembly 5 comprises a rotating part 51 and a spring 52, and the middle part of the rotating part 51 is fixedly connected to the air door rotating shaft 41 of the air door 4, the first end of the spring 52 is connected to the first end of the rotating part 51, the second end of the spring 52 is connected to the throttle body 1, the second end of the rotating part 51 is connected to the first end of the pull wire, and the second end of the pull wire is connected to the steering gear. Further, the pull wire can pass through the fixed bracket 53 in Fig. 1 to connect to the steering gear, the spring 52 is connected to the throttle body 1 through the fixed bracket 53, and the fixed bracket 53 can be placed horizontally with the rotating part 51 to form a horizontal pull, to achieve better pull efficiency. Of course, the pull wire can also be connected without passing through the fixing bracket 53, which is not limited here. When the steering gear pulls the pull wire, the second end of the rotating part 51 is pulled towards the fixed bracket 53, thereby driving the rotation of the air door rotating shaft 41 of the air door 4 to realize the rotation of the air door 4, while the spring 52 is elongated. When the air door 4 needs to rotate in the opposite direction, it is only necessary to reversely drive the steering gear. At this time, the pull wire is loosened, and the second end of the rotating part 51 is pulled away from the fixed bracket 53 due to the elastic force of the spring 52, thereby realizing the reverse rotation of the air door 4.

In some embodiments, the embodiment of the present invention further comprises a pressure sensor 6, which is connected to the throttle body 1 and used to detect the intake air pressure. In some embodiments, the embodiment of the present invention further comprises a position sensor 7, which can be connected to the air door rotation shaft 41 of the air door 4 and used to detect the air door opening angle of the air door 4.

The throttle can also comprise a limiting part 8, which can be set to move left and right in the horizontal direction, because it is close to the rotating part 51, thereby limiting the movement of the rotating part 51.

The second embodiment of the present invention provides an engine, including the throttle mentioned above. The throttle of the engine in this embodiment is provided with double fuel injectors to ensure that the other fuel injector can work instead when one of the fuel injectors is blocked or fails, thereby improving the reliability of the engine.

The third embodiment of the present invention provides an aircraft, including the above-mentioned engine. In this embodiment, the throttle of the aircraft engine is provided with double fuel injectors to ensure that the other fuel injector work instead when one of the fuel injectors is blocked or fails, thereby improving the reliability of the engine.

## Claims

1. A throttle for an engine, the throttle comprising:
a throttle body (1) provided with a cavity (10), an inlet port (11), and an outlet port (12), wherein the inlet port (11) and the outlet port (12) are connected to the cavity (10);
a plurality of fuel injectors (2), wherein each of the fuel injectors (2) is arranged on the throttle body (1) and sprays fuel into the cavity (10) of the throttle body (1);
an air filter (3) arranged on the throttle body (1) and is connected to the inlet port (11);
an air door (4) rotatably disposed in the cavity (10) to open or block the inlet port (11) and the outlet port (12); and
an air door driving part connected to the air door (4) configured to control a rotation of the air door (4),
wherein a cross section of the cavity (10) is circular,
**characterized in that**,
each of said plurality of fuel injectors (2) is arranged on a side wall of the throttle body (1) between the air door (4) and the outlet port (12), wherein each of said plurality of fuel injectors (2) is connected to the cavity (10), and
each of the plurality of fuel injectors (2) is provided with a quick-connection part (21) to connect to a fuel delivery pipe.

2. The throttle according to claim 1, wherein the plurality of fuel injectors (2) includes two fuel injectors (2a, 2b).

3. The throttle according to claim 1, further comprising a fuel injection port for each of said plurality of fuel injectors (2) and said each fuel injection port is arranged obliquely towards the outlet port (12).

4. The throttle according to claim 1, wherein the air door driving part is a steering gear, and an output shaft of the steering gear is coaxially connected to an air door rotation shaft (41) of the air door (4).

5. The throttle according to claim 1, further comprising a position sensor (7), the position sensor (7) is connected to the air door (4) and is configured to detect the opening angle of the air door (4).

6. The throttle according to any one of the preceding claims, further comprising a pressure sensor (6) connected to the throttle body (1) and configured to detect an intake air pressure.

7. An engine, which is **characterized in that** it includes the throttle according to any one of the above claims 1-6.

8. An aircraft, which is **characterized in that** it includes the engine according to claim 7.

## Patentansprüche

1. Drossel für einen Motor, wobei die Drossel Folgendes umfasst:
einen Drosselkörper (1), der mit einem Hohlraum (10), einer Einlassöffnung (11) und einer Auslassöffnung (12) versehen ist, wobei die Einlassöffnung (11) und die Auslassöffnung (12) mit dem Hohlraum (10) verbunden sind;
eine Vielzahl von Kraftstoffeinspritzvorrichtungen (2), wobei jede der Kraftstoffeinspritzvorrichtungen (2) am Drosselkörper (1) angeordnet ist und Kraftstoff in den Hohlraum (10) des Drosselkörpers (1) sprüht;
einen Luftfilter (3), der am Drosselkörper (1) angeordnet ist und mit der Einlassöffnung (11) verbunden ist;
eine Luftklappe (4), die drehbar in dem Hohlraum (10) angeordnet ist, um die Einlassöffnung (11) und die Auslassöffnung (12) zu öffnen oder zu blockieren; und
einen Luftklappenantriebsteil, der mit der Luftklappe (4) verbunden ist und konfiguriert ist, um eine Drehung der Luftklappe (4) zu steuern,
wobei ein Querschnitt des Hohlraums (10) kreisförmig ist,
**dadurch gekennzeichnet, dass**
jede der Vielzahl von Kraftstoffeinspritzvorrichtungen (2) an einer Seitenwand des Drosselkörpers (1) zwischen der Luftklappe (4) und der Auslassöffnung (12) angeordnet ist, wobei jede der Vielzahl von Kraftstoffeinspritzvorrichtungen (2) mit dem Hohlraum (10) verbunden ist, und
jede der Vielzahl von Kraftstoffeinspritzvorrichtungen (2) mit einem Schnellverbindungsteil (21) versehen ist, um mit einem Kraftstoffzufuhrrohr verbunden zu werden.

2. Drossel nach Anspruch 1, wobei die Vielzahl von Kraftstoffeinspritzvorrichtungen (2) zwei Kraftstoffeinspritzvorrichtungen (2a, 2b) umfasst.

3. Drossel nach Anspruch 1, ferner umfassend eine Kraftstoffeinspritzöffnung für jede der Vielzahl von Kraftstoffeinspritzvorrichtungen (2), und wobei jede Kraftstoffeinspritzöffnung schräg zur Auslassöffnung (12) angeordnet ist.

4. Drossel nach Anspruch 1, wobei der Luftklappenantriebsteil ein Lenkgetriebe ist und eine Ausgangswelle des Lenkgetriebes koaxial mit einer Luftklappendrehwelle (41) der Luftklappe (4) verbunden ist.

5. Drossel nach Anspruch 1, ferner umfassend einen Positionssensor (7), wobei der Positionssensor (7) mit der Luftklappe (4) verbunden ist und konfiguriert ist, um den Öffnungswinkel der Luftklappe (4) zu erfassen.

6. Drossel nach einem der vorhergehenden Ansprüche, ferner umfassend einen Drucksensor (6), der mit dem Drosselkörper (1) verbunden ist und konfiguriert ist, um einen Ansaugluftdruck zu erfassen.

7. Motor, der **dadurch gekennzeichnet ist, dass** er die Drossel nach einem der vorhergehenden Ansprüche 1-6 umfasst.

8. Flugzeug, das **dadurch gekennzeichnet ist, dass** es den Motor nach Anspruch 7 umfasst.

## Revendications

1. Papillon des gaz pour un moteur, le papillon des gaz comprenant :
un corps de papillon des gaz (1) pourvu d'une cavité (10), d'un orifice d'entrée (11) et d'un orifice de sortie (12), dans lequel l'orifice d'entrée (11) et l'orifice de sortie (12) sont raccordés à la cavité (10) ;
une pluralité d'injecteurs de carburant (2), dans lequel chacun des injecteurs de carburant (2) est agencé sur le corps de papillon des gaz (1) et pulvérise du carburant dans la cavité (10) du corps de papillon des gaz (1) ;
un filtre à air (3) agencé sur le corps de papillon des gaz (1) et est raccordé à l'orifice d'entrée (11);
une porte d'air (4) disposée de manière rotative dans la cavité (10) pour ouvrir ou bloquer l'orifice d'entrée (11) et l'orifice de sortie (12) ; et
une partie d'entraînement de porte d'air raccordée à la porte d'air (4) configurée pour commander une rotation de la porte d'air (4),
dans lequel une section transversale de la cavité (10) est circulaire,
**caractérisé en ce que**,
chacun de ladite pluralité d'injecteurs de carburant (2) est agencé sur une paroi latérale du corps de papillon des gaz (1) entre la porte d'air (4) et l'orifice de sortie (12), dans lequel chacun de ladite pluralité d'injecteurs de carburant (2) est raccordé à la cavité (10), et
chacun de la pluralité d'injecteurs de carburant (2) est pourvu d'une partie de raccordement rapide (21) pour se raccorder à un tuyau de distribution de carburant.

2. Papillon des gaz selon la revendication 1, dans lequel la pluralité d'injecteurs de carburant (2) comprend deux injecteurs de carburant (2a, 2b).

3. Papillon des gaz selon la revendication 1, comprenant en outre un orifice d'injection de carburant pour chacun de ladite pluralité d'injecteurs de carburant (2) et ledit chaque orifice d'injection de carburant est agencé obliquement vers l'orifice de sortie (12).

4. Papillon des gaz selon la revendication 1, dans lequel la partie d'entraînement de porte d'air est un engrenage de direction, et un arbre de sortie de l'engrenage de direction est raccordé coaxialement à un arbre de rotation de porte d'air (41) de la porte d'air (4).

5. Papillon des gaz selon la revendication 1, comprenant en outre un capteur de position (7), le capteur de position (7) est raccordé à la porte d'air (4) et est configuré pour détecter l'angle d'ouverture de la porte d'air (4).

6. Papillon des gaz selon l'une quelconque des revendications précédentes, comprenant en outre un capteur de pression (6) raccordé au corps de papillon des gaz (1) et configuré pour détecter une pression d'air d'admission.

7. Moteur, qui est **caractérisé en ce qu'**il comprend le papillon des gaz selon l'une quelconque des revendications 1 à 6 ci-dessus.

8. Aéronef, qui est **caractérisé en ce qu'**il comprend le moteur selon la revendication 7.
